# FASCICULE DE BREVET EUROPEEN

(11) **EP 2 403 164 B1**
(45) Date de publication et mention de la délivrance du brevet: **30.08.2017**
(21) Numéro de dépôt: 11170531.5
(22) Date de dépôt: 20.06.2011
(51) Int. Cl.: H04B 10/071, H04B 10/077, H04B 10/079

(54) **Procédé et dispositif de détermination d'un risque de coupure d'une fibre optique**
Verfahren und Vorrichtung zur Bestimmung der Reißgefahr einer optischen Faser
Method and device for determining the risk of severing an optical fibre

(30) Priorité: 01.07.2010 FR 1055290
(43) Date de publication de la demande: 04.01.2012
(73) Titulaire: Orange, 75015 Paris (FR)
(72) Inventeur: Le Rouzic, Esther, 22560 Trebeurden (FR); Brochier, Nicolas, 22970 Ploumagoar (FR); Pesic, Jelena, 22300 Ploubezre (FR)
(74) Mandataire: Cabinet Plasseraud

(56) Documents cités:
- JP-A- 59 104 531
- US-A- 5 767 956
- US-A1- 2006 159 464
- US-A1- 2009 226 174
- KOGA H ET AL: "Future maintenance systems for optical fiber cables", COMMUNICATIONS - RISING TO THE HEIGHTS. DENVER, JUNE 23 - 26, 1991; [PROCEEDINGS OF THE INTERNATIONAL CONFERENCE ON COMMUNICATIONS], NEW YORK, IEEE, US, vol. -, 23 juin 1991 (1991-06-23), pages 323-329, XP010044115, DOI: DOI:10.1109/ICC.1991.162382 ISBN: 978-0-7803-0006-4

## Description

L'invention concerne le domaine des systèmes de transmission par fibre optique, et en particulier la détection préventive d'un risque de coupure d'une fibre optique pouvant affecter de tels systèmes.

Dans le cadre d'un réseau de télécommunications par fibres optiques, une partie importante de l'indisponibilité du réseau est due aux coupures ou à l'endommagement des câbles optiques causés par des travaux de creusement à proximité. Bien que les câbles soient enterrés profondément et même si leur cheminement est signalé, il arrive très souvent que le câble soit arraché lors de travaux à proximité.

La coupure d'un câble entraîne, dans le meilleur des cas, des mécanismes de réaction au niveau des couches supérieures pour réacheminer le trafic vers des chemins de protection dédiés, ou, grâce à la restauration dynamique, vers des chemins calculés à la volée.

La demande US 2009/226174 illustre par exemple un procédé de surveillance d'un réseau WDM où certains paramètres optiques sont mesurés afin de prédire la défaillance d'un élément spécifique du réseau, sans qu'un tel procédé ne puisse identifier un évènement entraînant un risque de coupure.

Ces mécanismes sont réactifs et nécessitent donc un certain temps pour être mis en place, en tenant compte du temps de latence nécessaire à la détection de la coupure et au ré-aiguillage du trafic. Par exemple, dans le cas d'une protection de type « MS-SPRing » fournie sur les réseaux SDH, la commutation vers les chemins de protection est garantie en moins de 50ms, ou quelques dizaines de ms avec l'option « fast reroute ». Cependant, ces quelques dizaines de ms représentent des centaines de milliers d'octets qui sont perdus et doivent être réémis.

Il serait donc préférable d'essayer de réduire encore plus, voire d'éviter complètement cette indisponibilité.

La présente invention a pour objet de remédier à cet inconvénient et vient améliorer la situation, en permettant une détection anticipée d'un risque de coupure pouvant affecter une fibre optique, afin de mettre en oeuvre au mieux des actions préventives telles que la commutation de trafic vers des chemins de protection ou de restauration et de réduire, voire éviter, la période d'indisponibilité liée à une coupure ou un endommagement du câble optique.

La présente invention propose à cet effet un procédé de détermination d'un risque de coupure d'une fibre optique comprenant la mesure de la variation d'au moins un paramètre caractéristique d'un signal optique traversant la fibre optique pendant une durée déterminée et la détermination du risque de coupure de la fibre optique en fonction de la détection d'au moins un évènement entraînant le risque de coupure au moyen de la variation mesurée du paramètre caractéristique, l'étape de détection d'un évènement entraînant le risque de coupure comprenant une recherche de similitude entre une signature d'un évènement en cours, obtenue à partir de la variation mesurée du paramètre caractéristique, et une signature caractéristique dudit évènement entraînant le risque de coupure, obtenue à partir d'une variation prédéterminée dudit paramètre caractéristique durant un intervalle de temps pendant lequel a lieu ledit évènement entraînant le risque de coupure. Ceci permet d'améliorer la fiabilité de la détection du risque de coupure.

Dans un mode particulier de réalisation, une signature caractéristique d'un fonctionnement normal est obtenue à partir d'une variation prédéterminée dudit paramètre caractéristique durant un intervalle de temps pendant lequel le fonctionnement est normal et la recherche de similitude prend également en compte la signature caractéristique d'un fonctionnement normal.

En particulier, la recherche de similitude comprend l'évaluation d'un degré de similitude de la variation mesurée avec la variation prédéterminée dudit paramètre caractéristique et la détection de l'occurrence d'un évènement en fonction de la probabilité d'occurrence dudit évènement associée au degré de similitude évalué.

Avantageusement, le procédé de détermination comprend en outre une étape d'analyse de conséquences de l'évènement en cours si aucun évènement connu n'est détecté. Ceci permet d'enrichir la base de connaissance contenant les différents évènements.

De façon avantageuse, la recherche de similitude comprend l'utilisation d'un algorithme d'intelligence artificielle et/ou d'apprentissage et/ou de classification.

Dans un mode de réalisation particulier, la recherche de similitude est effectuée entre des transformées de la variation mesurée et de la variation prédéterminée, lesdites transformées appartenant au groupe comprenant une transformée spectrale, une dérivée, une dérivée seconde, une vitesse angulaire, une accélération tangentielle, une accélération normale, une concaténation de transformées, ce qui permet de s'affranchir de certains éléments parasitant le signal.

Avantageusement, la variation prédéterminée dudit paramètre caractéristique est obtenue préalablement par la mesure de la variation du au moins un paramètre caractéristique pendant un intervalle de temps au cours duquel a lieu ledit évènement entraînant le risque de coupure. Il est ainsi possible de collecter un grand nombre de mesures de ces variations préalablement aux étapes de mesure des paramètres. La recherche de similitude est ensuite plus fiable et peut s'effectuer en temps réel.

Avantageusement, la variation d'au moins deux paramètres caractéristiques distincts est mesurée et la détermination du risque de coupure est effectuée en fonction de la similitude de la variation mesurée desdits paramètres caractéristiques avec au moins une variation prédéterminée desdits paramètres caractéristiques, ce qui permet d'affiner la mesure et l'identification du risque de coupure.

Dans un mode de réalisation avantageux, le au moins un paramètre caractéristique est un paramètre relatif à la polarisation du signal optique traversant la fibre optique, ce qui permet de détecter très rapidement l'occurrence d'un évènement risquant de provoquer la coupure de la fibre optique.

En particulier, le au moins un paramètre caractéristique est un état de polarisation qui comprend par exemple un premier, un deuxième et un troisième paramètres de Stokes, ce qui permet de détecter très rapidement l'occurrence d'un évènement provoquant un risque de coupure tout en permettant d'identifier l'évènement par le croisement des informations fournies par les trois paramètres de Stokes.

Dans un mode de réalisation avantageux, le signal optique comprend une pluralité de canaux optiques multiplexés en longueur d'ondes, caractérisé en ce que le au moins un paramètre caractéristique est mesuré par rapport à au moins deux desdits canaux optiques, ce qui permet d'affiner la détermination en analysant le comportement du paramètre caractéristique sur plusieurs longueurs d'onde.

La présente invention propose également un procédé de routage d'un signal optique dans un réseau de transmission optique comprenant au moins deux fibres optiques, ce procédé de routage comprenant l'application du procédé de détermination d'un risque de coupure ci-avant sur au moins une desdites fibres optiques et, si un risque de coupure est déterminé sur ladite fibre optique, le réacheminement d'un signal optique traversant ladite fibre optique par une autre desdites fibres optiques.

La présente invention propose, en outre, un système de détermination d'un risque de coupure d'une fibre optique comprenant un dispositif de détection d'un évènement entraînant un risque de coupure, ledit dispositif de détection comprenant des moyens de traitement agencés pour mesurer la variation d'au moins un paramètre caractéristique d'un signal optique traversant la fibre optique pendant une durée déterminée, pour déterminer un risque de coupure de la fibre optique en fonction de la détection d'au moins un évènement entraînant un risque de coupure au moyen de la variation mesurée du paramètre caractéristique et pour émettre un signal d'alarme si un évènement entraînant un risque de coupure est détecté.

Dans un mode particulier de réalisation, le système de détermination comprend un coupleur configuré pour extraire un signal optique de la fibre optique et fournir ce signal optique extrait au dispositif de détection, ce qui permet de s'affranchir de toute contrainte en termes de disponibilité d'un port de surveillance pour connecter le système de détermination à une fibre optique.

Avantageusement, le dispositif de détection comprend des moyens de mémorisation dans lesquels est mémorisée au moins une signature caractéristique d'un évènement entraînant un risque de coupure, obtenue à partir de la mesure de la variation prédéterminée d'un paramètre caractéristique d'un signal optique pendant un intervalle du temps durant lequel a lieu ledit évènement entraînant un risque de coupure, les moyens de traitement utilisant lesdits moyens de mémorisation pour déterminer le risque de coupure de la fibre optique.

La présente invention propose, par ailleurs, un réseau de transmission optique comprenant au moins deux fibres optiques, un module de supervision arrangé pour contrôler le basculement de la transmission de données sur l'une desdites fibres optiques et au moins un système de détermination d'un risque de coupure tel que décrit ci-avant, ce système de détermination étant associé à l'une desdites fibres optiques pour y déterminer un risque de coupure et étant configuré pour réacheminer les données transitant sur ladite fibre optique sur une autre desdites fibres optiques si un évènement entraînant un risque de coupure de ladite fibre optique est détecté.

Le procédé et le système de détermination d'un risque de coupure, objets de l'invention, seront mieux compris à la lecture de la description et à l'observation des dessins ci-après dans lesquels :
- la figure 1 illustre les étapes d'un procédé de détermination d'un risque de coupure affectant une fibre optique selon un mode de réalisation de la présente invention ;
- les figures 2A-2G illustrent un mode particulier de réalisation dans lequel le paramètre dont la variation est mesurée est l'état de polarisation d'un signal optique traversant la fibre optique surveillée ;
- les figures 3A et 3B illustrent un système de détermination d'un risque de coupure affectant une fibre optique selon un mode de réalisation de la présente invention ; et
- la figure 3C illustre un réseau de transmission comprenant un système de détermination d'un risque de coupure affectant une fibre optique selon un mode de réalisation de la présente invention.

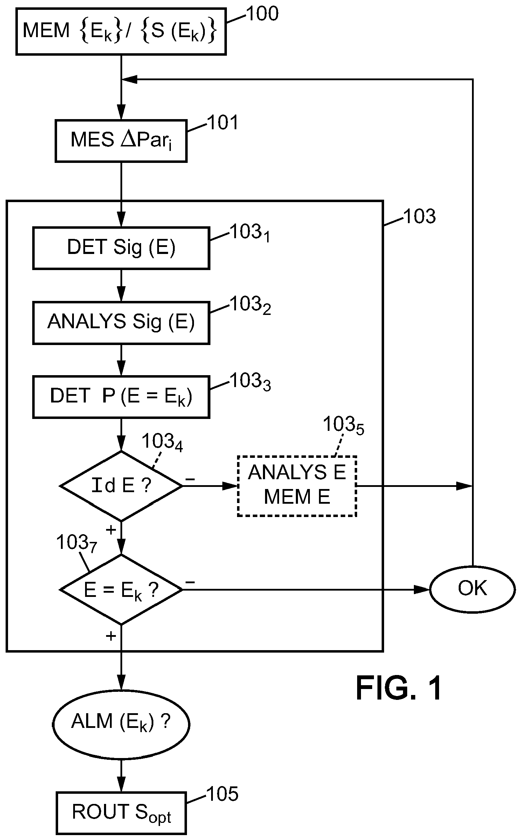

On se réfère tout d'abord à la **figure 1** sur laquelle sont illustrées les étapes d'un procédé de détermination d'un risque de coupure d'une fibre optique selon un mode de réalisation de la présente invention.

Ce procédé de détermination s'applique à une fibre optique qui est traversée par un signal optique Sₒₚₜ. Un tel signal optique Sₒₚₜ peut être un signal transmettant des données ou un signal optique dédié à la surveillance ou à la gestion de la fibre optique.

Dans une étape préalable 100, on caractérise au moins un événement Eₖ entraînant un risque de coupure en mesurant une variation ΔParᵢ d'au moins un paramètre caractéristique Pari induite par cet événement. L'ensemble des mesures ΔParᵢ pour un évènement Eₖ est noté par la suite Sigⱼ(Eₖ) et est appelé échantillon de signature de l'événement Eₖ, de sorte que Sigⱼ(Eₖ)={ΔParᵢ}_{1≤i≤n} où n correspond au nombre de paramètres caractéristiques dont la variation est mesurée.

La variation d'un ou plusieurs paramètres caractéristiques Pari du signal Sₒₚₜ peut ainsi être mesurée, étant entendu que plus le nombre n de paramètres Par₁, ..., Parᵢ, ..., Parₙ dont la variation est mesurée est important, plus il est possible d'affiner la détermination du risque de coupure au détriment de l'augmentation de la complexité de calcul.

Cette mesure de variation est effectuée sur une durée déterminée, qui peut être de l'ordre de quelques centaines de millisecondes, par exemple 500 ms. Cette durée résulte d'un compromis entre la précision recherchée pour déterminer la probabilité de l'occurrence de l'évènement et la rapidité de détection dudit évènement.

Dans un exemple illustratif qui sera discuté plus loin en détail, les paramètres caractéristiques Pari dont la variation ΔParᵢ est mesurée peuvent consister en des états de polarisation du signal optique Sopt. Cependant, il est également possible de mesurer la variation d'autres paramètres caractéristiques, comme la puissance optique, par exemple en sortie ou en entrée d'un transpondeur ou d'un amplificateur optique située sur la fibre optique, le taux d'erreur binaire caractérisant les données transportées par le signal Sopt, le délai différentiel de groupe du signal Sₒₚₜ (DGD pour Differential Group Delay en anglais), les paramètres de récepteurs cohérents (les coefficients des filtres numériques du signal, scalaires représentant le canal de transmission dans le cas de multi-porteuses OFDM par exemple).

Plus généralement, la variation de tout paramètre caractéristique Parᵢ du signal optique Sₒₚₜ fournissant des informations permettant de prévoir une coupure potentielle de la fibre optique peut être utilisée pour la mise en oeuvre du procédé de détermination.

Il est possible de caractériser l'événement Eₖ à l'aide d'une signature caractéristique Sig(Eₖ) représentative de l'ensemble des échantillons de signatures de l'événement Eₖ {Sigⱼ(Eₖ)} permettant une bonne représentation de l'événement Eₖ selon la méthode d'identification choisie (comparaison, ressemblance, classification...).

En d'autres termes, Sig(Eₖ) = {Sigⱼ(Eₖ)} _{1≤j≤J} où J est le nombre d'échantillons de signature rassemblés.

Cette signature caractéristique Sig(Eₖ) de l'événement Eₖ doit en particulier contenir un nombre J suffisant d'échantillons de signatures Sigⱼ(Eₖ), par exemple quatre échantillons. Aucune restriction n'est attachée à cette valeur, les performances du procédé augmentant en fonction du nombre d'échantillons utilisés.

Un échantillon de signature Sigⱼ(Eₖ) peut inclure un ensemble de variation ΔParᵢ d'au moins un paramètre caractéristique Parᵢ sous la forme d'une transformation mathématique qui permet une bonne représentation de l'événement. Il s'agit par exemple une transformée de Fourrier d'une fenêtre temporelle, une concaténation d'informations temporelles et fréquentielles, d'une dérivée, etc.

Une fois déterminé (et mémorisé dans une base de données de connaissance) un ensemble de signatures caractéristiques Sig(Eₖ) associées à des évènements Eₖ donnés, le procédé de détermination comporte une étape 101 de mesure de la variation (désignée par ΔParᵢ) d'au moins un paramètre caractéristique Parᵢ du signal Sₒₚₜ traversant la fibre optique sur laquelle on désire détecter un éventuel risque de coupure.

Suite à la mesure de la variation ΔParᵢ d'un ou plusieurs paramètres caractéristiques Parᵢ effectuée sur une durée prédéterminée, une étape 103 de détermination du risque de coupure de la fibre optique est effectuée.

Cette détermination du risque de coupure se fait en fonction de la détection d'au moins un évènement Eₖ entraînant un risque de coupure, cette détection étant effectuée au moyen de la variation ΔParᵢ d'au moins un paramètre caractéristique Parᵢ mesurée lors de l'étape 101.

Dans un mode de réalisation particulier, cette étape de détection d'un évènement Eₖ entraînant un risque de coupure comprend notamment:
- l'obtention (étape 103₁) d'une signature Sig(E) d'un événement en cours E caractérisée par la variation ΔParᵢ d'au moins un paramètre caractéristique Parᵢ induite par l'événement en cours E telle que mesurée lors de l'étape 101,
- l'analyse (étape 103₂) de la signature Sig (E) afin de déterminer un degré de similitude entre la signature de l'évènement en cours E et celle d'un évènement déjà connu Eₖ, mémorisée dans la base de données de signatures d'évènement déjà connus, et
- une détermination d'une probabilité d'occurrence P(E=Eₖ) de chacun des évènements Eₖ. en fonction du degré de similitude entre cet évènement Eₖ et l'évènement E en cours (étape 103₃).

Plus précisément, à l'étape 103₂, on détermine le degré de similitude pour chacun des évènements Eₖ connus.

La probabilité d'occurrence déterminée est fonction du degré de similitude et de la probabilité a priori de l'évènement Eₖ, c'est à dire la probabilité d'occurrence de Eₖ dans la "nature", indépendamment de la similitude évaluée.

On vérifie ensuite (103₄) si un des évènements Eₖ connus est identifié. Dans un mode particulier de réalisation, la détermination de l'occurrence d'un évènement Eₖ donné (103₃) est obtenue par l'identification de la valeur maximale de la probabilité d'occurrence obtenue P(E=Eₖ) pour chacun des événements Eₖ.

Si aucune probabilité d'occurrence P(E=Eₖ) n'est supérieure à un seuil prédéterminé ou si les probabilités d'occurrence ne permettent pas de discriminer un évènement particulier, aucun évènement n'est identifié. Dans ce cas, on retourne à l'étape 101 de mesure de variation d'au moins un paramètre Parᵢ, afin d'effectuer une surveillance continue de cette fibre optique.

De manière avantageuse ici, si aucun évènement Eₖ n'est identifié (étape 103₄), il est possible d'effectuer une étape d'analyse des conséquences de cet évènement E ainsi que de mémoriser cet évènement E avec sa signature Sig(E) afin d'enrichir la base de connaissance contenant les différents évènements (étape 103₅), avant de retourner à l'étape 101 de mesure de variation.

Si la recherche d'identification de l'événement E en cours dans un ensemble d'évènements Eₖ a permis d'identifier un évènement, dans une étape 103₇, on vérifie si cet évènement Eₖ identifié entraîne un risque de coupure.

Si l'événement Eₖ entraîne un risque de coupure, un signal d'alarme ALM(Eₖ) est alors émis, par exemple à destination du superviseur du réseau ou d'un système de supervision contrôlant le réacheminement de données dans le réseau.

Par contre, si l'évènement E en cours ne correspond à aucun des événements Eₖ entraînant un risque de coupure, cela signifie que la fibre optique n'est a priori pas menacée de coupure. Dans ce cas, on retourne à l'étape 101 de mesure de variation d'au moins un paramètre Parᵢ, afin d'effectuer une surveillance continue de cette fibre optique. Le retour à l'étape 101 de mesure peut être déclenché ou effectué à intervalles réguliers selon des fenêtres temporelles.

Une ou plusieurs transformations mathématiques peuvent être utilisées lors de cette recherche de similitude, étant entendu que plus le nombre m de représentations est important pour les évènements E et Eₖ, plus il est possible d'affiner la détermination du risque de coupure au détriment de l'augmentation de la complexité de calcul.

Dans un mode de réalisation où l'on cherche à ne détecter qu'un seul type d'évènement Eₖ entraînant un risque de coupure, il suffit donc de déterminer au préalable une signature caractéristique Sig(Eₖ) à partir de la détermination d'un nombre suffisant d'échantillons de signature Sigⱼ(Eₖ) (par exemple quatre échantillons) caractérisant cet évènement particulier, et d'analyser soit continûment, soit à intervalles réguliers, la variation du ou des paramètre(s) caractéristique(s) ΔParᵢ mesurée(s) pour identifier cette signature caractéristique Sig(Eₖ), pour détecter l'occurrence de cet évènement Eₖ avec une probabilité définie par le degré de similitude entre les signatures Sig(E) et Sig(Eₖ), et ainsi déterminer qu'il existe un risque de coupure de la fibre optique. Aucune restriction n'est attachée à la valeur du nombre d'échantillons de signature Sigⱼ(Eₖ), les performances du procédé augmentant en fonction du nombre d'échantillons utilisés.

Par contre, dans un mode de réalisation où l'on cherche à détecter un ensemble de n évènements entraînant un risque de coupure (désigné par {Eₖ}_{1≤k≤n}), il convient de déterminer au préalable, pour chacun de ces évènements Eₖ, une signature caractéristique Sig(Eₖ) à partir de la détermination d'un nombre suffisant (par exemple quatre échantillons) d'échantillons de signature Sigⱼ(Eₖ) caractérisant cet évènement particulier.

L'étape 103₂ d'analyse comporte alors la confrontation systématique de la signature Sig(E) de l'événement en cours E mesurée avec chacune des signatures caractéristiques Sig(Eₖ) caractérisant un des évènements particuliers parmi l'ensemble {Eₖ}_{1≤k≤n}.

Cette confrontation peut se faire en temps réel, à l'aide d'un programme de reconnaissance de signatures qui peut être basé sur la mise en oeuvre d'algorithmes d'intelligence artificielle, d'apprentissage ou de classification. Il peut s'agir par exemple de l'outil Khiops, disponible à l'adresse « www.khiops.com ».

Un mode particulier de réalisation de la confrontation de la signature de l'évènement en cours Sig(E) avec l'ensemble des signatures caractéristiques mémorisées {Sig(Eₖ)} _{1≤k≤n} est effectué en évaluant le degré de similitude entre les signatures caractéristiques de chaque événement prédéterminé Eₖ et la signature de l'événement en cours Sig(E). La probabilité d'occurrence de chaque évènement Eₖ associée aux similitudes évaluées est déterminée et l'identification de l'événement en cours à un événement particulier Eₖ est défini comme l'événement Eₖ obtenant la probabilité d'occurrence maximale.

Si l'identification de l'une des signatures caractéristiques Sig(Eₖ) s'avère positive au sens d'un maximum de similitude (c'est-à-dire avec une probabilité d'occurrence maximale), alors non seulement l'occurrence de l'évènement particulier Eₖ, et donc un risque de coupure de la fibre optique occasionnée par cet évènement est détecté mais aussi le type d'évènement causant ce risque est identifié avec une probabilité d'occurrence associée au degré de similitude obtenu.

Des actions préventives et correctives spécifiques à ce type d'évènement peuvent alors être immédiatement envisagées et implémentées, si possible avant même que la coupure ne soit occasionnée.

Une telle "prédiction" peut ainsi être utilisée au niveau du plan de commande, ou de tout autre système responsable des mécanismes de protection et de restauration, pour prendre une décision sur les mécanismes de routage du réseau à mettre en oeuvre de façon préventive.

Ainsi, si un risque de coupure est déterminé sur la fibre optique sur laquelle s'applique le procédé de détermination au cours de l'étape 103 de détermination, une étape 105 de réacheminement du signal optique Sₒₚₜ traversant ladite fibre optique sur une autre fibre optique peut alors être effectuée, afin de protéger le trafic de données traversant cette fibre menacée de coupure.

Dans un mode de réalisation particulier, une signature associée à l'évènement « fonctionnement correct » est déterminée au préalable. Si l'analyse de la signature Sig(E) permet d'identifier avec une probabilité suffisante l'événement « fonctionnement correct », alors aucun risque de coupure ne semble affecter la fibre optique qui donc est considérée comme ne courant pas de risque connu de coupure et fonctionnant a priori normalement.

Si l'analyse de la signature Sig(E) ne permet pas d'identifier un événement prédéterminé Eₖ alors l'événement E est identifié comme inconnu. Dans ce cas, on peut le considérer soit comme risqué, soit comme non risqué, et prendre ou non la décision de réacheminer le signal optique Sₒₚₜ. Ceci permet d'améliorer les performances du procédé.

Dans un autre mode de réalisation, on peut améliorer la base de données des événements définis comme entraînant un risque de coupure en analysant l'effet des événements identifiés comme inconnus sur le signal (par exemple "coupure" ou "fonctionnement correct") pour les ajouter à cette base (étape 103₅).

Dans un autre mode de réalisation, la probabilité d'occurrence déterminée est uniquement fonction du degré de similitude.

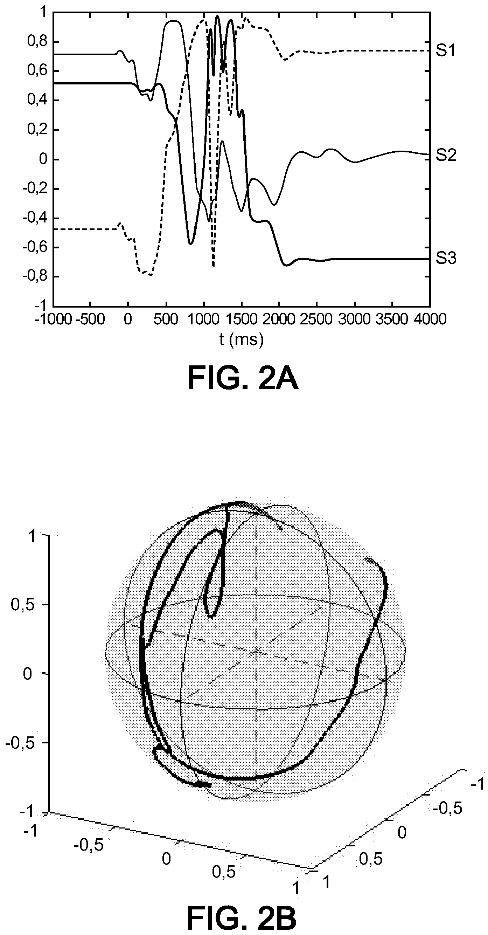

On se réfère maintenant aux **figures 2A à 2G** qui illustrent un mode particulier de réalisation de la présente invention dans lequel les paramètres Pari dont la variation ΔParᵢ est mesurée sont les paramètres d'état de polarisation (SOP pour State Of Polarisation en anglais) du signal optique Sₒₚₜ.

En effet, la mesure des variations de la polarisation d'un signal optique permet de détecter très rapidement, par exemple en 500 ms, un certain nombre d'évènements causant potentiellement la rupture de la fibre optique. Par exemple, la répétition d'une tension mécanique à une fréquence donnée, par exemple due à des vibrations faites à proximité d'un câble, a un impact sur la polarisation d'un signal optique traversant ce câble.

Un événement extérieur de type creusement mécanique (par une pelleteuse, par exemple) près d'un câble, lequel amène un risque de coupure de ce câble, peut ainsi être détecté et identifié quelques secondes ou millisecondes avant que la coupure n'arrive, ce qui permet de réagir rapidement afin de limiter, voire d'éviter complètement, toute perte de données. Ainsi, ce laps de temps peut être mis à profit pour router de façon dynamique le trafic sur un autre câble avant que la coupure du câble ne soit effective.

L'état de polarisation du signal optique Sₒₚₜ peut être avantageusement caractérisé au moyen des trois paramètres de Stokes, désignés ici par S1, S2 et S3. Dans ce mode particulier de réalisation, l'étape 101 consiste alors à mesurer ces trois paramètres de Stokes et l'étape 103 de détermination à rechercher une similitude avec des variations prédéterminées de ces trois paramètres, ou signatures, caractérisant des événements précurseurs de défauts potentiels, comme une vibration à proximité du câble, indicatrice d'un risque de coupure et d'en estimer la probabilité d'occurrence.

Les figures 2A à 2G sont données à titre illustratif et représentent les variations des paramètres caractéristiques lors de quatre évènements particuliers. Ces variations ont été mesurées expérimentalement sur un banc d'essai expérimental.

Les figures 2A et 2B illustrent ainsi l'évolution temporelle des paramètres de Stokes d'un signal optique Sₒₚₜ lors d'un déplacement de la fibre optique traversée par ce signal optique (évènement désigné par E₁ à titre purement illustratif).

En particulier, la figure 2A représente en deux dimensions la variation en amplitude des trois paramètres de Stokes S1, S2 et S3 telle qu'elle est mesurée sur une plage de 5 secondes.

La figure 2B, quant à elle, représente la même variation des trois paramètres de Stokes S1, S2 et S3, mais en trois dimensions, sur une sphère de Poincaré.

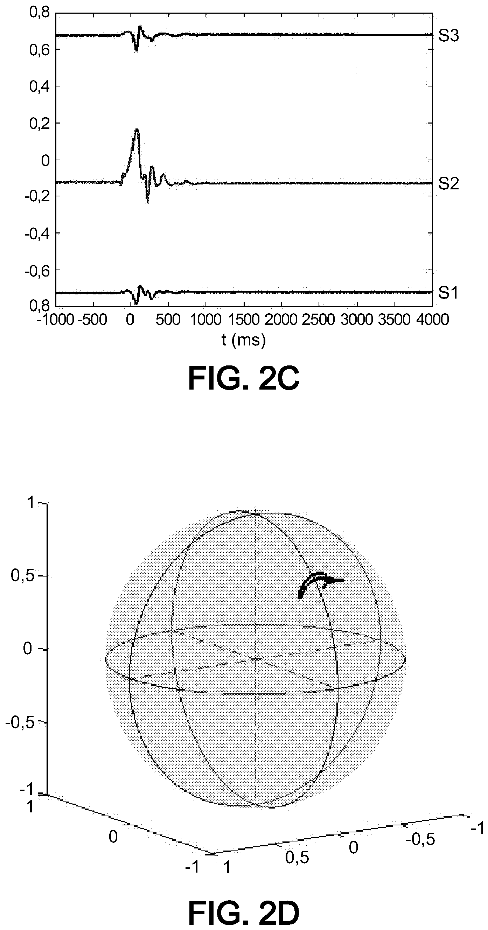

Les figures 2C et 2D illustrent, quant à elles, l'évolution temporelle des paramètres de Stokes d'un signal optique Sₒₚₜ lors d'un léger choc sur la fibre optique traversée par ce signal optique (évènement désigné par E₂ à titre purement illustratif), en deux dimensions pour la figure 2C et en trois dimensions pour la figure 2D sur une plage de 5 secondes.

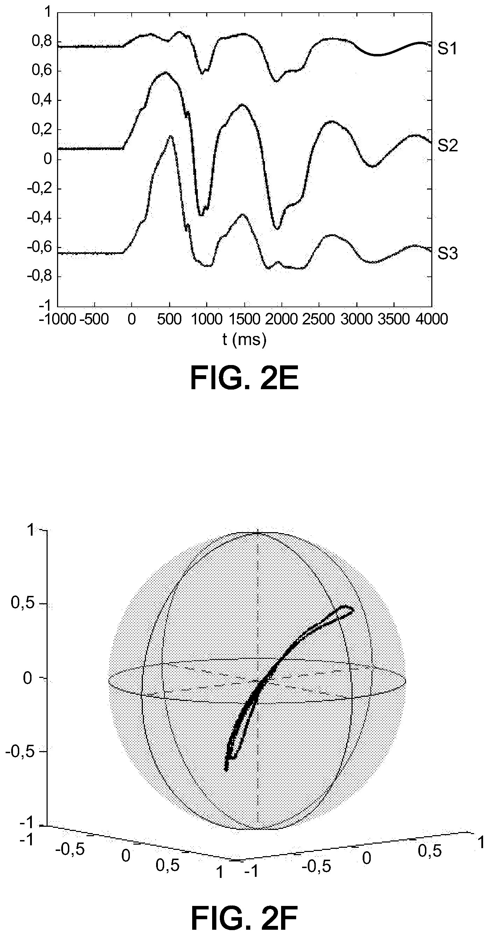

Les figures 2E et 2F illustrent, par ailleurs, l'évolution temporelle des paramètres de Stokes d'un signal optique Sₒₚₜ lors d'un balancement de la fibre, par exemple pour une fibre en extérieur manipulée accidentellement par un engin de chantier, traversée par ce signal optique (évènement désigné par E₃ à titre purement illustratif).

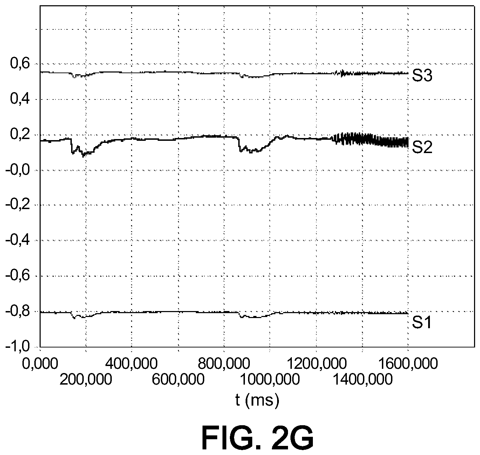

La figure 2G illustre, enfin, l'évolution temporelle en deux dimensions des paramètres de Stokes d'un signal optique Sₒₚₜ traversant une fibre lors d'une vibration de celle-ci (évènement désigné par E₄ à titre purement illustratif).

Au travers des exemples ci-dessus, il est apparent que la variation des trois paramètres de Stokes permet de différencier (i.e. de « signer ») un évènement parmi d'autres et peut être utilisée pour identifier cet évènement.

Bien entendu, d'autres paramètres définissant une fluctuation de l'état de polarisation, comme la vitesse angulaire, l'accélération tangentielle ou l'accélération normale par exemple, peuvent être employés ici.

Ce mode de réalisation où la variation de l'état de polarisation est surveillée est particulièrement avantageux dans le sens où les fluctuations rapides de l'état de polarisation de la lumière traversant la fibre optique permettent d'anticiper très rapidement un risque de coupure et d'intervenir extrêmement rapidement, avant que le risque de coupure ne se concrétise en une coupure proprement dite, afin de limiter, voire d'éviter complètement, toute perte de données.

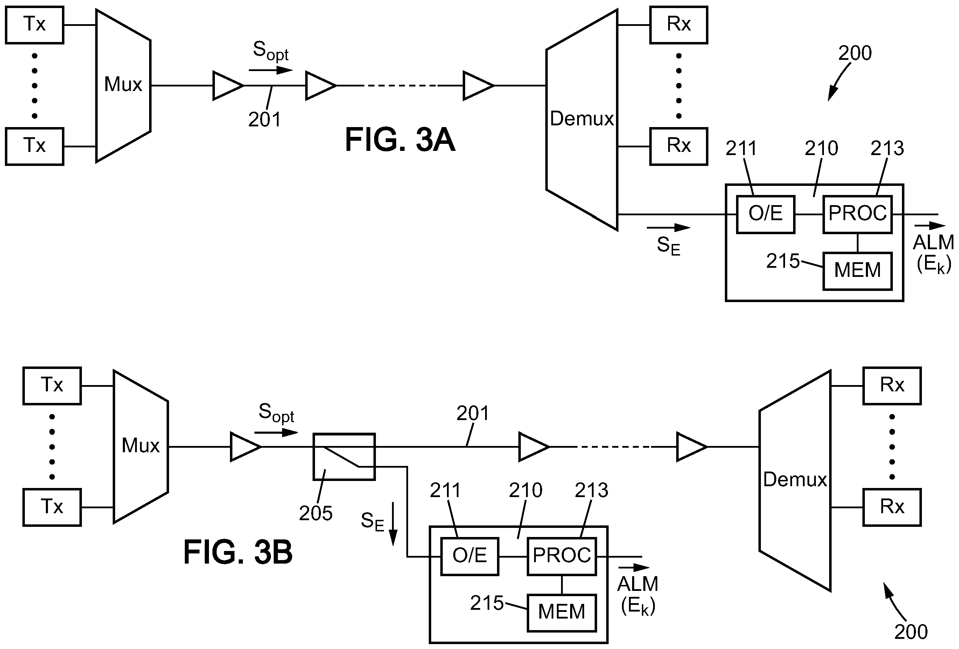

La **figure 3A** illustre un système de détermination 200 d'un risque de coupure d'une fibre optique selon un mode de réalisation de la présente invention.

Ce système de détermination est installé sur une fibre optique 201 à surveiller, laquelle fait partie d'un système de transmission optique.

Dans l'exemple présent, le système de transmission correspondant est un système à multiplexage en longueurs d'ondes (WDM) comportant une pluralité d'émetteurs Tx dont les signaux sont multiplexés par un multiplexeur Mux en un seul signal optique Sₒₚₜ se propageant dans la fibre optique 201. Des amplificateurs optiques OA peuvent être situés le long de la fibre optique 201 pour maintenir le niveau de puissance de ce signal Sₒₚₜ qui est démultiplexé, en fin de fibre optique 201, par un démultiplexeur Demux afin que signaux portés par les longueurs d'onde individuelles puissent être reçus au moyen de récepteurs Rx.

Le système de détermination 200 comporte un dispositif de détection 210 recevant un signal optique S_{E} extrait de la fibre optique 201 au niveau d'un port de surveillance du démultiplexeur Demux, et correspondant par exemple à une fraction du signal optique Sₒₚₜ traversant cette fibre optique 201.

Ce dispositif de détection comprend des moyens de conversion photo-électrique 211, des moyens de traitement 213 connecté à ce module de conversion, ainsi que des moyens de mémorisation 215 connectés au module de traitement 213.

Le module de conversion photo-électrique 211 reçoit le signal optique S_{E} extrait de la fibre optique 201 et le convertit en un signal électrique s_{E}.

Ce signal converti s_{E} est ensuite utilisé par le module de traitement 213 pour mettre en oeuvre le procédé de détermination tel que décrit précédemment.

En particulier, le module de traitement 213 effectue la mesure de la variation ΔParᵢ d'au moins un paramètre caractéristique Parᵢ d'un signal traversant la fibre optique pendant une durée déterminée à partir du signal extrait converti s_{E}.

Le module de traitement 213 effectue par ailleurs la détermination de la signature de l'événement en cours Sig(E) à partir des mesures des ΔParᵢ et des diverses opérations mathématiques de transformation prédéfinies (transformation de Fourier d'une fenêtre temporelle, concaténation d'informations temporelles et fréquentielles, dérivée ...).

Une fois la signature Sig(E) déterminée, le module de traitement 213 effectue la détermination du risque de coupure en fonction de la détection d'un évènement Eₖ entraînant un tel risque de coupure et de sa probabilité d'occurrence, avantageusement au moyen de la recherche de similitude maximale entre la signature de l'événement en cours Sig(E) et les signatures caractéristiques Sig(Eₖ) prédéterminées des événements Eₖ entraînant le risque de coupure.

Pour cette dernière opération, le module de traitement 213 fait avantageusement appel aux moyens de traitement 215 dans lesquels sont mémorisées un certain nombre de signatures caractéristiques Sig(Eₖ) caractérisant un évènement entraînant un risque de coupure. Le module de traitement 213 effectue alors la comparaison de la signature de l'événement en cours Sig(E) avec l'ensemble des signatures caractéristiques mémorisées {Sig(Eₖ)}_{1≤k≤m}, afin de déterminer si cette signature Sig(E) correspond au moins substantiellement à l'une de ces signatures Sig(Eₖ) mémorisées.

La signature caractéristique Sig(Eₖ) d'un évènement particulier Eₖ est obtenue au préalable à partir de la détermination d'au moins une signature Sigⱼ(Eₖ) basée sur la mesure de la variation d'au moins un paramètre pendant une durée déterminée pour un événement Eₖ.

Avantageusement, la signature caractéristique Sig(Eₖ) d'un évènement particulier Eₖ est obtenue à partir de la détermination de plusieurs échantillons de signatures Sigⱼ(Eₖ) basés sur les mesures de la variation d'au moins un paramètre pendant une durée déterminée pour un même événement Eₖ. Les paramètres mesurés pour obtenir la signature caractéristique de l'événement Eₖ doivent être tous les mêmes. Ces échantillons de signatures peuvent être basés sur l'ensemble de ces mesures préalables ou sur seulement une partie d'entre elles. Ces échantillons de signatures peuvent également être issus d'une combinaison de ces mesures préalables ou résulter d'une fonction mathématique et/ou numérique appliquées auxdites mesures préalables, comme par exemple l'application d'une transformée de Fourier ou d'une dérivée.

Ce processus de mémorisation de signatures caractéristiques peut ainsi être effectué pour un certain nombre d'évènement Eₖ reconnus comme pouvant causer un risque de coupure de la fibre optique, ce qui est en particulier le cas pour des évènements de nature mécanique se déroulant à proximité de la fibre optique.

Chaque événement dont une ou plusieurs signature(s) Sig(Eₖ) est ainsi mémorisée peut enrichir la bibliothèque de l'algorithme de reconnaissance et ainsi améliorer la précision de la prévision de coupure, par un apprentissage en continu.

Si les moyens de traitement 213 déterminent que la signature d'un événement en cours Sig(E) correspond à une signature caractéristique Sig(Eₖ) mémorisée relative à un événement de type « fonctionnement correct », aucun évènement particulier entraînant un risque de coupure n'est détecté et il n'y a pas lieu d'agir.

Si par contre, une correspondance substantielle caractéristique d'une probabilité d'occurrence importante est détectée entre la signature Sig(E) et l'une des signatures caractéristiques Sig(Eₖ) mémorisées dans les moyens de mémorisation 215, le module de traitement 210 émet un signal d'alarme ALM(Eₖ). Ce signal ALM(Eₖ) sert à informer le superviseur du réseau qu'il y a un risque de coupure à très court terme de la fibre optique et que ce risque est causé par un évènement Eₖ. Ce signal ALM(Eₖ) peut aussi servir directement à déclencher le ré-acheminement des signaux vers une autre fibre optique afin d'éviter une perte de données potentielles si le risque de coupure se concrétise.

Dans le mode de réalisation particulier de la figure 3A, le dispositif de détection 210 peut être directement connecté à un port de surveillance optique d'un équipement de la liaison fibrée, pour recevoir un signal optique S_{E} extrait de la fibre optique 201. Le dispositif 210 peut également être connecté via un autre port de surveillance optique spécifique ou sur n'importe quel autre point de mesure optique de l'équipement.

Dans un autre mode de réalisation particulier illustré sur la **figure 3B**, et avantageux en cas d'indisponibilité ou d'absence de port de surveillance optique, un coupleur optique de prélèvement 205 peut être inséré dans la fibre optique 201 pour en extraire le signal optique S_{E} et détecter la variation ΔParᵢ d'un ou de plusieurs paramètres caractéristiques Pari du signal optique Sₒₚₜ à partir de ce signal extrait. Un tel coupleur 205 peut être, par exemple, un coupleur 95/5 fournissant en sortie un signal optique extrait S_{E} correspondant à 5 % du signal optique reçu.

Le dispositif de détection 210 peut ainsi être localisé en n'importe quel point de la fibre optique 201, soit par l'intermédiaire d'un accès à un port de surveillance optique ou grâce à un coupleur de prélèvement optique. Par exemple, on peut imaginer placer un dispositif de détection 210 mesurant les variations d'état de polarisation du signal Sₒₚₜ au niveau de chaque site d'amplification OA.

Dans un autre mode de réalisation, l'équipement terminal Rx, ou une fonction de cet équipement terminal, permet d'accéder directement à un paramètre caractéristique du signal optique Sₒₚₜ, comme par exemple aux paramètres de Stokes ou à une information relative à la polarisation. C'est en particulier le cas des récepteurs cohérents. Dans ce mode de réalisation, la mesure de la variation de ces paramètres accédés directement par cet équipement terminal peut être fournie en temps réel aux moyens de traitement 213 du dispositif de détection 210, afin que ceux-ci puissent détecter la présence éventuelle d'une signature Sig(Eₖ) correspondant à un évènement Eₖ entraînant un risque de coupure.

Dans un système de transmission WDM, la mesure du ou des paramètre(s) caractéristique(s) du signal traversant la fibre optique peut s'effectuer sur un seul des canaux optiques formant le signal multiplexé en longueurs d'onde.

Dans un tel mode de réalisation, comme le coupleur de prélèvement 205 (ou le port de surveillance optique, le cas échéant) donne accès à l'ensemble des canaux WDM du signal Sₒₚₜ, un filtre optique doit être inséré entre le coupleur de prélèvement 205 (ou le port de surveillance optique, le cas échéant) et le dispositif de détection 210, afin que ce dernier ne reçoive qu'un seul canal optique, ce qui peut s'avérer suffisant pour rechercher une signature caractéristique.

Cependant, dans un autre mode de réalisation, il peut être avantageux d'effectuer la mesure simultanément sur plusieurs canaux WDM du signal Sₒₚₜ, par exemple sur N canaux mesurés grâce à N ports de surveillance connectés respectivement à N dispositifs de détection d'évènement entrainant un risque coupure, afin de diminuer l'incertitude d'estimation liée, par exemple, à l'utilisation d'un algorithme d'intelligence artificielle et/ou d'apprentissage.

Il est par ailleurs possible de combiner la mesure d'un certain nombre de paramètres distincts (par exemple la variation des paramètres de Stokes, de la puissance optique et du taux d'erreur binaire) afin d'affiner le modèle de signatures et de mieux caractériser l'évènement potentiellement déclencheur d'une coupure.

L'acquisition des mesures des paramètres caractéristiques du signal traversant la fibre est effectuée en continu dans un premier mode de réalisation.

Avantageusement, cette acquisition peut être de façon déclenchée, c'est-à-dire seulement lorsque le dispositif de détection 210 détecte une variation du paramètre observé supérieure à une limite définie par un superviseur pendant un temps donné. A titre purement illustratif, l'acquisition peut être déclenchée à la condition qu'une variation de plus de 10 degrés de l'état de polarisation soit détectée pendant 10 ms.

La comparaison, par les moyens de traitement 213, de la signature Sig(E) de l'événement en cours déterminée à partir des variations mesurée ΔParᵢ du ou des paramètre(s) caractéristique(s) Pari du signal optique avec la ou les signature(s) caractéristiques Sig(Eₖ) d'un évènement Eₖ entraînant un risque de coupure peut être faite en temps réel ou en temps légèrement décalé s'il y a une période d'acquisition des données.

Cette comparaison peut être effectuée grâce à un algorithme de type réseaux neuronaux, d'apprentissage ou de classification pour identifier le type de signature détectée.

Dans un mode particulier de réalisation, un algorithme de classification peut ainsi être employé. Un tel algorithme peut comprendre un outil de « scoring » pour extraire de l'information à partir de grandes bases de données et mettre en oeuvre une méthode de discrétisation basée sur une statistique de chi². Un tel outil peut également servir à un modèle de score pour des tâches d'apprentissage contrôlé, selon une approche de Bayes naïve.

Dans ce mode particulier de réalisation, le dispositif de détection 210 présente une première base de données pour la phase d'apprentissage et une deuxième base de données pour évaluer le processus. Ceci permet d'obtenir une fonction décrivant le plus précisément possible le comportement de la liaison de transmission (ici la fibre optique) dans le cas de différentes contraintes mécaniques.

Pour reprendre les exemples illustrés dans les figures 2C-2G, les trois types de contraintes mécaniques suivantes peuvent être employés pour valider le concept :
- un choc,
- un balancement
- une vibration

Ainsi, pendant la phase d'apprentissage et d'évaluation, l'algorithme de classification ajuste les coefficients de sa fonction d'estimation et donne les résultats sous la forme d'une matrice de confusion.

Une telle matrice de confusion peut être utilisée dans des mécanismes d'apprentissage contrôlé où chaque ligne de la matrice représente les occurrences dans une classe prédéfinie, tandis que chaque colonne représente les occurrences dans une classe réelle.

L'algorithme de classification nous donne ensuite comme résultat la probabilité postérieure de l'événement considéré comme entraînant un risque de coupure.

Ainsi, dans un exemple où seuls les trois paramètres de Stokes sont utilisés pour déterminer les signatures d'événements entrainant un risque de coupure, ces paramètres de Stokes sont calculés et moyennés sur une certaine fenêtre de temps glissante.

Les données de mesure ainsi obtenues peuvent être traitée directement, mais il est avantageux de regarder les fréquences de la variation de l'état de polarisation à partir de la transformée de Fourier ou toute autre transformation de ces données. Ces données de mesure servent à créer une base de données pour la phase d'apprentissage de l'algorithme de classification.

L'optimisation du choix de certains paramètres de représentation, comme la taille de la fenêtre de calcul de la Transformée de Fourier Rapide (c'est-à-dire son nombre de points), les fréquences considérées comme caractéristiques dont les valeurs peuvent discriminer des classes d'événement différentes ou l'intervalle temporel entre 2 mesures, permettent d'optimiser la fiabilité de la fonction d'estimation.

Cependant cette optimisation doit également prendre en compte la durée de la mesure et du traitement, car prévoir une coupure de câble avec 100% de réussite une fois que la coupure a déjà eu lieu ne présente plus d'intérêt. Plus la fenêtre de calcul est grande, meilleure est la précision mais plus on a besoin de temps pour détecter une coupure potentielle.

Ainsi, au cours de tests réalisés, une fenêtre de mesure de 800 ms donne environ 100% de réussite pour le classement avec succès d'un événement parmi les trois classes définies d'évènement entrainant un risque de coupure de la fibre, dans cet exemple. On approche les 90% avec une fenêtre d'environ 300 ms.

Le choix des paramètres de représentation et leur optimisation est donc un compromis entre, d'une part, le risque de prévision erronée d'une coupure et, d'autre part, le temps requis pour mettre en place les procédures de réacheminement du trafic.

Dans un autre mode de réalisation, le résultat de la détection peut être déterminé en fonction du degré de similitude entre la signature d'un événement en cours Sig(E) et l'une des signatures caractéristiques Sig(Eₖ) mémorisées. Si ce degré de similitude avec un événement prédéterminé Eₖ représentatif d'un risque de coupure dépasse un certain seuil, défini par le superviseur, avec une probabilité d'occurrence suffisamment forte pour une signature spécifique, alors il est déterminé qu'un évènement pouvant entrainer la coupure de la fibre optique a bel et bien lieu.

L'utilisation de telles signatures caractéristiques comme précurseurs d'un événement présentant une menace pour l'intégrité de la fibre optique permet de réduire les temps d'indisponibilité dans le réseau et d'améliorer la surveillance de l'intégrité physique des liens. En effet, une décision de restauration préventive peut être prise, suite à la reconnaissance d'une telle signature caractéristique et de l'évènement qui lui est associé, en tenant en compte du temps d'établissement des mécanismes de restauration.

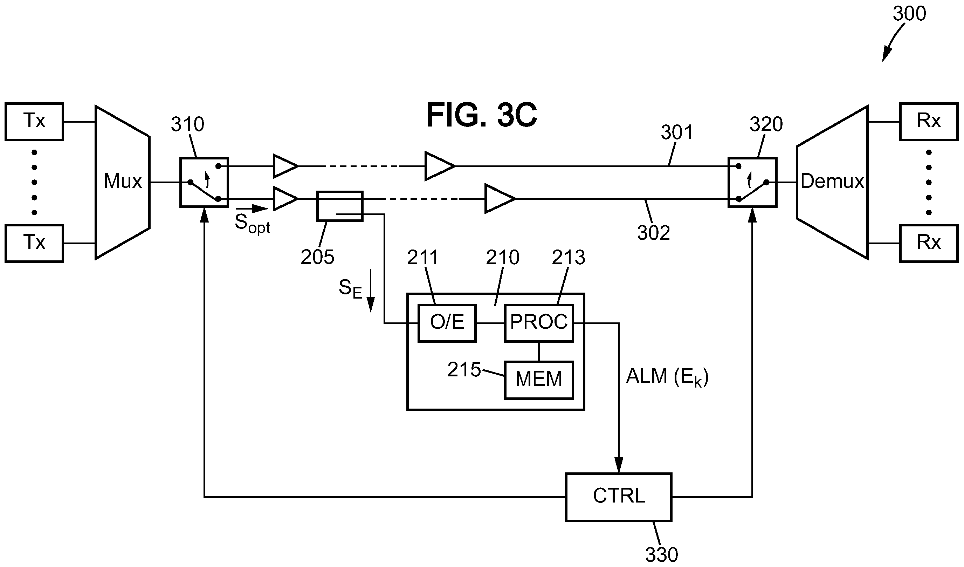

Enfin, la **figure 3C** illustre un réseau de transmission 300 comprenant un système de détermination 200 d'un risque de coupure affectant une fibre optique selon la présente invention.

Ce réseau de transmission 300 comprend deux fibres optiques 301 et 302 reliant un ensemble d'émetteurs Tx à un ensemble de récepteurs Rx. Deux commutateurs optiques 310 et 320 sont installés en entrée et en sortie des ces deux liaisons optiques afin de permettre le basculement du signal optique Sₒₚₜ émis par l'ensemble d'émetteurs Tx (par multiplexage en longueurs d'onde) sur l'une ou l'autre des fibres optiques 301, 302.

Les commutateurs optiques 310 et 320 sont gérés par un module de supervision 330 qui leur indique sur quelle fibre optique basculer en fonction de divers éléments.

Le réseau de transmission 300 comprend en outre un système de détermination tel que décrit précédemment à la figure 3B, comprenant un dispositif de détection 210 permettant de surveiller un risque de coupure de la fibre optique 302. Ce dispositif 210 est connecté, d'une part, à un coupleur 205 situé sur la fibre optique 302 et, d'autre part, au module de supervision 330 du réseau 300.

Dans le mode de fonctionnement où les commutateurs optiques 301, 302 sont positionnés de sorte à ce que le trafic de données transite sur la fibre optique 302, par l'intermédiaire d'un signal optique Sₒₚₜ, le système de détermination 210 peut détecter l'occurrence d'un évènement Eₖ entraînant un risque de coupure et émettre une alarme ALM(Eₖ) lorsqu'un tel évènement est détecté.

Si un tel évènement est détecté, l'alarme ALM(Eₖ) est transmise au module de supervision 330 qui peut alors instruire aux commutateurs optiques 310 et 320 de basculer dans une autre position dans laquelle le trafic de données ne transite plus par la fibre optique 302, mais par la fibre optique 301.

Comme le trafic de données est basculé sur une autre fibre optique de façon préventive, dès la détection d'un évènement pouvant entraîner la coupure de la fibre optique 302, et non lors de la détection d'une défaillance liée à la coupure de cette fibre optique 302, le risque de perdre des données est fortement diminué.

Si ce basculement des commutateurs optiques est effectif avant même que la coupure de la fibre optique 302 ne se produise, la perte de données peut même évitée. Même si le basculement des commutateurs optiques n'est effectif qu'après la coupure de la fibre optique 302, le fait d'avoir commandé le basculement à partir de la détection de l'évènement causant la coupure et non à partir de la détection de la coupure proprement dite permet de diminuer le temps pendant lequel le trafic de données continue à se faire sur une fibre optique défaillante, et donc diminue la quantité de données perdues.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

En particulier, la présente invention s'applique à tous les types de réseaux de transmission optiques, qu'ils soient WDM ou non, et que la fibre optique surveillée soit enterrée, aérienne, ou sous-marine.

Par ailleurs, la présente invention peut servir à détecter n'importe quel évènement Eₖ engendrant un risque de coupure, notamment à des évènements où des forces mécaniques s'appliquent sur la fibre.

Ainsi, dans le cas où la fibre optique est enterrée, on peut détecter le risque de coupure par un engin mécanique lors de travaux de drainage, de carottage, de terrassement, de forage, de fonçage, de curage ou lors de travaux routiers ou de construction.

Toujours dans le cas où la fibre optique est enterrée, l'action d'un rongeur, ou le vandalisme peut être détecté. Une erreur de manipulation de la fibre, lors du câblage ou de l'assemblage de connectique peut également être détectée.

Dans le cas où la fibre optique est aérienne, on peut détecter le risque de coupure dû à des travaux d'élagage, du fait du passage d'un camion ou d'un engin agricole qui accrocherait la fibre à leur passage, du fait d'un accident lorsque le poteau portant la fibre est arraché, du fait du vandalisme (e.g. vol de câble, découpage) ou du fait d'un problème de câblage ou de connectique (dû à une erreur de manipulation dans les centraux par exemple)

Dans le cas où la fibre optique est une fibre sous marine, il est possible de détecter l'accrochage de la fibre (lors d'opérations de pêche ou d'ancrage de bateau).

L'objet de la présente invention trouve une application naturelle dans la protection des réseaux de transmission et le re-routage préventif de données en cas de détection d'un risque potentiel de coupure. Cependant, la présente invention ne se limite pas à ce type d'application mais peut être utilisée dans tout type d'application nécessitant une action préventive rapide, en temps réel.

Ainsi, lorsque le procédé de détermination selon la présente invention est appliqué aux réseaux de transmission optique sous-marins, les signatures caractéristiques de fluctuation de polarisation peuvent également être utilisées pour détecter et prédire différents types de mouvements des fonds marins comme par exemple tremblements de terre, marées, tsunamis.

## Revendications

1. Procédé de détermination d'un risque de coupure d'une fibre optique comprenant la mesure (101) de la variation d'au moins un paramètre (ΔParᵢ) caractéristique d'un signal optique (Sₒₚₜ) traversant la fibre optique pendant une durée déterminée et la détermination (103) du risque de coupure de la fibre optique en fonction de la détection (103₇) d'au moins un évènement (Eₖ) entraînant le risque de coupure au moyen de la variation mesurée du paramètre caractéristique, l'étape de détection (103₇) d'un évènement (Eₖ) entraînant le risque de coupure comprenant une recherche de similitude entre une signature (Sig(E)) d'un évènement en cours, obtenue à partir de la variation mesurée du paramètre caractéristique, et une signature caractéristique (Sig(Eₖ)) dudit évènement (Eₖ) entraînant le risque de coupure, obtenue à partir d'une variation prédéterminée dudit paramètre caractéristique durant un intervalle de temps pendant lequel a lieu ledit évènement entraînant le risque de coupure,
dans lequel au moins un des paramètres parmi le au moins un paramètre caractéristique est un paramètre relatif à une polarisation du signal optique traversant la fibre optique.

2. Procédé de détermination selon la revendication 1, dans lequel, une signature caractéristique d'un fonctionnement normal étant obtenue à partir d'une variation prédéterminée dudit paramètre caractéristique durant un intervalle de temps pendant lequel le fonctionnement est normal, la recherche de similitude prend également en compte la signature caractéristique d'un fonctionnement normal.

3. Procédé de détermination selon la revendication 1 ou 2, dans lequel la recherche de similitude comprend l'évaluation du degré de similitude de la variation mesurée (ΔParᵢ) avec la variation prédéterminée dudit paramètre caractéristique et la détection de l'occurrence d'un évènement en fonction de la probabilité d'occurrence (P(E=Eₖ)) dudit évènement associée au degré de similitude évalué.

4. Procédé de détermination selon la revendication 3, comprenant en outre une étape d'analyse (103₅) de conséquences de l'évènement en cours si aucun évènement connu n'est détecté.

5. Procédé de détermination selon l'une des revendications 1 à 4, dans lequel la recherche de similitude comprend l'utilisation d'un algorithme d'intelligence artificielle et/ou d'apprentissage et/ou de classification.

6. Procédé de détermination selon l'une des revendications 1 à 5, dans lequel la variation prédéterminée dudit paramètre caractéristique est obtenue préalablement (100) par la mesure de la variation du au moins un paramètre caractéristique pendant un intervalle de temps au cours duquel a lieu ledit évènement (Eₖ).

7. Procédé de détermination selon l'une des revendications 1 à 6, dans lequel la variation d'au moins deux paramètres caractéristiques distincts est mesurée (101) et la détermination (103) du risque de coupure est effectuée en fonction de la similitude de la variation mesurée desdits paramètres caractéristiques avec au moins une variation prédéterminée desdits paramètres caractéristiques.

8. Procédé de détermination selon l'une des revendications précédentes, dans lequel le signal optique comprend une pluralité de canaux optiques multiplexés en longueur d'ondes, **caractérisé en ce que** le au moins un paramètre caractéristique est mesuré par rapport à au moins deux desdits canaux optiques.

9. Procédé de routage d'un signal optique dans un réseau de transmission optique comprenant au moins deux fibres optiques, **caractérisé par** l'application du procédé de détermination d'un risque de coupure selon l'une des revendications 1 à 8 sur au moins une desdites fibres optiques et, si un risque de coupure est déterminé sur ladite fibre optique, le réacheminement (105) d'un signal optique traversant ladite fibre optique par une autre desdites fibres optiques.

10. Système de détermination (200) d'un risque de coupure d'une fibre optique (201) comprenant un dispositif (210) de détection d'un évènement entraînant un risque de coupure, ledit dispositif de détection comprenant des moyens de traitement (213) agencés pour mesurer la variation d'au moins un paramètre (ΔParᵢ) caractéristique d'un signal optique (Sₒₚₜ) traversant la fibre optique pendant une durée déterminée, pour déterminer un risque de coupure de la fibre optique en fonction de la détection d'au moins un évènement (Eₖ) entraînant un risque de coupure au moyen de la variation mesurée du paramètre caractéristique et pour émettre un signal d'alarme (ALM(Eₖ)) si un évènement entraînant un risque de coupure est détecté,
dans lequel au moins un des paramètres parmi le au moins un paramètre caractéristique est un paramètre relatif à une polarisation du signal optique traversant la fibre optique ;
dans lequel les moyens de traitement sont en outre configurés pour détecter l'évènement entraînant un risque de coupure au moyen d'une recherche de similitude entre une signature (Sig(E)) d'un évènement en cours, obtenue à partir de la variation mesurée du paramètre caractéristique, et une signature caractéristique (Sig(Eₖ)) dudit évènement (Eₖ) entraînant le risque de coupure, obtenue à partir d'une variation prédéterminée dudit paramètre caractéristique durant un intervalle de temps pendant lequel a lieu ledit évènement entraînant le risque de coupure.

11. Système de détermination (200) d'un risque de coupure d'une fibre optique (201) selon la revendication 10, comprenant en outre un coupleur (205) configuré pour extraire un signal optique (S_{E}) de la fibre optique et fournir ce signal optique extrait (S_{E}) au dispositif de détection (210).

12. Système de détermination (200) d'un risque de coupure d'une fibre optique (201) selon la revendication 10 ou 11, dans lequel le dispositif de détection (210) comprend des moyens de mémorisation (215) dans lesquels est mémorisée au moins une signature caractéristique (Sigⱼ(Eₖ)) d'un évènement (Eₖ) entraînant un risque de coupure, obtenue à partir de la mesure de la variation prédéterminée d'un paramètre caractéristique d'un signal optique (Sₒₚₜ) pendant un intervalle du temps durant lequel a lieu ledit évènement (Eₖ) entraînant un risque de coupure, les moyens de traitement (213) utilisant lesdits moyens de mémorisation pour déterminer le risque de coupure de la fibre optique.

13. Réseau de transmission optique comprenant au moins deux fibres optiques (301,302), un module de supervision (330) arrangé pour contrôler le basculement de la transmission de données sur l'une desdites fibres optiques et au moins un système de détermination (200) d'un risque de coupure selon l'un des revendications 10 à 12, ledit système de détermination étant associé à l'une desdites fibres optiques (302) pour y déterminer un risque de coupure et étant configuré pour réacheminer les données transitant sur ladite fibre optique (302) sur une autre desdites fibres optiques (301) si un évènement entraînant un risque de coupure de ladite fibre optique (302) est détecté.

## Patentansprüche

1. Verfahren zur Bestimmung einer Reißgefahr einer optischen Faser, umfassend das Messen (101) der Änderung von mindestens einem Parameter (ΔParᵢ) , der für ein optisches Signal (Sₒₚₜ) charakteristisch ist, das die optische Faser während einer vorbestimmten Zeitdauer durchläuft, und das Bestimmen (103) der Reißgefahr der optischen Faser in Abhängigkeit von dem Erfassen (103₇) von mindestens einem Ereignis (Eₖ), das die Reißgefahr verursacht, mittels der gemessenen Änderung des charakteristischen Parameters, wobei der Schritt des Erfassens (103₇) eines Ereignisses (Eₖ), das die Reißgefahr verursacht, ein Suchen einer Ähnlichkeit zwischen einer Signatur (Sig(E)) eines aktuellen Ereignisses, die aus der gemessenen Änderung des charakteristischen Parameter erhalten wird, und einer charakteristischen Signatur (Sig(Eₖ)) des Ereignisses (Eₖ), das die Reißgefahr verursacht, die aus einer vorbestimmten Änderung des charakteristischen Parameters während einer Zeitdauer erhalten wird, während der das Ereignis eintritt, das die Reißgefahr verursacht, umfasst,
wobei mindestens einer der Parameter aus dem mindestens einen charakteristischen Parameter ein Parameter in Bezug auf eine Polarisation des optischen Signals ist, das die optische Faser durchläuft.

2. Verfahren zur Bestimmung nach Anspruch 1, wobei, nachdem eine Signatur, die für einen normalen Betrieb charakteristisch ist, aus einer vorbestimmten Änderung des charakteristischen Parameters während einer Zeitdauer erhalten wird, während der der Betrieb normal ist, das Suchen einer Ähnlichkeit ebenfalls die Signatur berücksichtigt, die für einen normalen Betrieb charakteristisch ist.

3. Verfahren zur Bestimmung nach Anspruch 1 oder 2, wobei das Suchen einer Ähnlichkeit das Beurteilen des Ähnlichkeitsgrades der gemessenen Änderung (ΔParᵢ) mit der vorbestimmten Änderung des charakteristischen Parameters und das Erfassen des Auftretens eines Ereignisses in Abhängigkeit von der Wahrscheinlichkeit des Auftretens (P(E=Eₖ)) des Ereignisses, das mit dem beurteilten Ähnlichkeitsgrad verbunden ist, umfasst.

4. Verfahren zur Bestimmung nach Anspruch 3, ferner umfassend einen Schritt des Analysierens (103₅) von Folgen des aktuellen Ereignisses, wenn kein bekanntes Ereignis erfasst wird.

5. Verfahren zur Bestimmung nach einem der Ansprüche 1 bis 4, wobei das Suchen einer Ähnlichkeit das Verwenden von einem Algorithmus einer künstlichen Intelligenz und/oder von einem Lernalgorithmus und/oder von einem Algorithmus zur Klassifizierung umfasst.

6. Verfahren zur Bestimmung nach einem der Ansprüche 1 bis 5, wobei die vorbestimmte Änderung des charakteristischen Parameters durch das Messen der Änderung des mindestens einen charakteristischen Parameters während einer Zeitdauer, während der das Ereignis (Eₖ) stattfindet, im Voraus erhalten wird (100).

7. Verfahren zur Bestimmung nach einem der Ansprüche 1 bis 6, wobei die Änderung von mindestens zwei verschiedenen charakteristischen Parametern gemessen wird (101) und das Bestimmen (103) der Reißgefahr in Abhängigkeit von der Ähnlichkeit der gemessenen Änderung der charakteristischen Parameter mit mindestens einer vorbestimmte Änderung der charakteristischen Parameter durchgeführt wird.

8. Verfahren zur Bestimmung nach einem der vorhergehenden Ansprüche, wobei das optische Signal mehrere optische Wellenlängenmultiplex-Kanäle umfasst, **dadurch gekennzeichnet, dass** der mindestens eine charakteristische Parameter in Bezug auf mindestens zwei der optischen Kanäle gemessen wird.

9. Verfahren zum Routing eines optischen Signals in einem optischen Übertragungsnetzwerk, das mindestens zwei optische Fasern umfasst, **gekennzeichnet durch** das Anwenden des Verfahrens zur Bestimmung einer Reißgefahr nach einem der Ansprüche 1 bis 8 auf mindestens einer der optischen Fasern und, wenn eine Reißgefahr auf der optischen Faser bestimmt worden ist, das Weiterleiten (105) eines optischen Signals, das die optische Faser durchläuft, durch eine andere der optischen Fasern.

10. System zur Bestimmung (200) einer Reißgefahr einer optischen Faser (201), umfassend eine Vorrichtung (210) zum Erfassen eines Ereignisses, das eine Reißgefahr verursacht, wobei die Vorrichtung zum Erfassen Mittel zur Verarbeitung (213) umfasst, die ausgelegt sind, um die Änderung von mindestens einem Parameter (ΔParᵢ) zu messen, der charakteristisch für ein optisches Signal (Sₒₚₜ) ist, das die optische Faser während einer vorbestimmten Zeitdauer durchläuft, um eine Reißgefahr der optischen Faser in Abhängigkeit von dem Erfassen von mindestens einem Ereignis (Eₖ), das eine Reißgefahr verursacht, mittels der gemessenen Änderung des charakteristischen Parameters zu bestimmen, und um ein Alarmsignal (ALM(Eₖ)) abzugeben, wenn ein Ereignis erfasst wird, das eine Reißgefahr verursacht,
wobei mindestens einer der Parameter aus dem mindestens einen charakteristischen Parameter ein Parameter in Bezug auf eine Polarisation des optischen Signals ist, das die optische Faser durchläuft;
wobei die Mittel zur Verarbeitung ferner konfiguriert sind, das Ereignis, das eine Reißgefahr verursacht, durch ein Suchen einer Ähnlichkeit zwischen einer Signatur (Sig(E)) eines aktuellen Ereignisses, die in Abhängigkeit von der gemessenen Änderung des charakteristischen Parameters erhalten wird, und einer charakteristischen Signatur (Sig(Eₖ)) des Ereignisses (Eₖ), das die Reißgefahr verursacht, die aus einer vorbestimmten Änderung des charakteristischen Parameters während einer Zeitdauer erhalten wird, während der das Ereignis eintritt, das die Reißgefahr verursacht, zu erfassen.

11. System zur Bestimmung (200) einer Reißgefahr einer optischen Faser (201) nach Anspruch 10, ferner umfassend einen Koppler (205), der konfiguriert ist, ein optisches Signal (S_{E}) aus der optischen Faser zu extrahieren und dieses extrahierte optische Signal (S_{E}) der Vorrichtung zum Erfassen (210) bereitzustellen.

12. System zur Bestimmung (200) einer Reißgefahr einer optischen Faser (201) nach Anspruch 10 oder 11, wobei die Vorrichtung zum Erfassen (210) Speichermittel (215) umfasst, in denen mindestens eine charakteristische Signatur (Sigⱼ(Eₖ)) eines Ereignisses (Eₖ), das eine Reißgefahr verursacht, gespeichert wird, die aus dem Messen der vorbestimmten Änderung eines Parameters erhalten wird, der charakteristisch für ein optisches Signal (Sₒₚₜ) während einer vorbestimmten Zeitdauer ist, während der das Ereignis (Eₖ) eintritt, das eine Reißgefahr verursacht, wobei die Mittel zur Verarbeitung (213) die Speichermittel verwenden, um die Reißgefahr der optischen Faser zu bestimmen.

13. Optisches Übertragungsnetzwerk, umfassend mindestens zwei optische Fasern (301, 302), ein Überwachungsmodul (330), das angeordnet ist, um das Umschalten der Datenübertragung auf eine der optischen Fasern zu kontrollieren, und mindestens ein System zur Bestimmung (200) einer Reißgefahr nach einem der Ansprüche 10 bis 12, wobei das System zur Bestimmung mit einer der optischen Fasern (302) verbunden ist, um darauf eine Reißgefahr zu bestimmen, und konfiguriert ist, die Daten, die auf der optischen Faser (302) laufen, auf eine andere der optischen Fasern (301) weiterzuleiten, wenn ein Ereignis, das die Reißgefahr der optischen Faser (302) verursacht, erfasst wird.

## Claims

1. Method for determining a risk of severing of an optical fibre comprising the measurement (101) of the variation of at least one parameter (ΔParᵢ) characteristic of an optical signal (Sₒₚₜ) travelling along the optical fibre for a determined duration and the determination (103) of the risk of severing of the optical fibre as a function of the detection (103₇) of at least one event (Eₖ) entailing the risk of severing by means of the measured variation of the characteristic parameter, the step (103₇) of detecting an event (Eₖ) entailing the risk of severing comprising a search for similarity between a signature (Sig(E)) of an event in progress, obtained on the basis of the measured variation of the characteristic parameter, and a characteristic signature (Sig(Eₖ)) of said event (Eₖ) entailing the risk of severing, obtained on the basis of a predetermined variation of said characteristic parameter over a time interval during which said event entailing the risk of severing takes place,
in which at least one of the parameters from among the at least one characteristic parameter is a parameter relating to a polarization of the optical signal travelling along the optical fibre.

2. Determining method according to Claim 1, in which, a signature characteristic of normal operation being obtained on the basis of a predetermined variation of said characteristic parameter over a time interval during which operation is normal, the similarity search also takes into account the signature characteristic of normal operation.

3. Determining method according to Claim 1 or 2, in which the similarity search comprises the evaluation of the degree of similarity of the measured variation (ΔParᵢ) with the predetermined variation of said characteristic parameter and the detection of the occurrence of an event as a function of the probability of occurrence (P(E=Eₖ)) of said event, associated with the evaluated degree of similarity.

4. Determining method according to Claim 3, furthermore comprising a step (103₅) of analysing consequences of the event in progress if no known event is detected.

5. Determining method according to one of Claims 1 to 4, in which the similarity search comprises the use of an artificial intelligence and/or learning and/or classification algorithm.

6. Determining method according to one of Claims 1 to 5, in which the predetermined variation of said characteristic parameter is obtained previously (100) by measuring the variation of the at least one characteristic parameter during a time interval in the course of which said event (Eₖ) takes place.

7. Determining method according to one of Claims 1 to 6, in which the variation of at least two distinct characteristic parameters is measured (101) and the determination (103) of the risk of severing is performed as a function of the similarity of the measured variation of said characteristic parameters with at least one predetermined variation of said characteristic parameters.

8. Determining method according to one of the preceding claims, in which the optical signal comprises a plurality of wavelength multiplexed optical channels, **characterized in that** the at least one characteristic parameter is measured with respect to at least two of said optical channels.

9. Method for routing an optical signal in an optical transmission network comprising at least two optical fibres, **characterized by** the application of the method for determining a risk of severing according to one of Claims 1 to 8 on at least one of said optical fibres and, if a risk of severing is determined on said optical fibre, the re-forwarding (105) of an optical signal travelling along said optical fibre through another of said optical fibres.

10. System (200) for determining a risk of severing of an optical fibre (201) comprising a device (210) for detecting an event entailing a risk of severing, said detection device comprising processing means (213) designed to measure the variation of at least one parameter (ΔParᵢ) characteristic of an optical signal (Sₒₚₜ) travelling along the optical fibre for a determined duration, so as to determine a risk of severing of the optical fibre as a function of the detection of at least one event (Eₖ) entailing a risk of severing by means of the measured variation of the characteristic parameter and to emit an alarm signal (ALM(Eₖ)) if an event entailing a risk of severing is detected,
in which at least one of the parameters from among the at least one characteristic parameter is a parameter relating to a polarization of the optical signal travelling along the optical fibre;
in which the processing means are furthermore configured to detect the event entailing a risk of severing by means of a search for similarity between a signature (Sig(E)) of an event in progress, obtained on the basis of the measured variation of the characteristic parameter, and a characteristic signature (Sig(Eₖ)) of said event (Eₖ) entailing the risk of severing, obtained on the basis of a predetermined variation of said characteristic parameter over a time interval during which said event entailing the risk of severing takes place.

11. System (200) for determining a risk of severing of an optical fibre (201) according to Claim 10, furthermore comprising a coupler (205) configured to extract an optical signal (S_{E}) from the optical fibre and to provide this extracted optical signal (S_{E}) to the detection device (210).

12. System (200) for determining a risk of severing of an optical fibre (201) according to Claim 10 or 11, in which the detection device (210) comprises storage means (215) in which is stored at least one characteristic signature (Sigⱼ(Eₖ)) of an event (Eₖ) entailing a risk of severing, obtained on the basis of the measurement of the predetermined variation of a parameter characteristic of an optical signal (Sₒₚₜ) over an interval of the time during which said event (Eₖ) entailing a risk of severing takes place, the processing means (213) using said storage means to determine the risk of severing of the optical fibre.

13. Optical transmission network comprising at least two optical fibres (301,302), a supervision module (330) arranged so as to check the toggling of the transmission of data on one of said optical fibres and at least one system (200) for determining a risk of severing according to one of Claims 10 to 12, said determining system being associated with one of said optical fibres (302) so as to determine therein a risk of severing and being configured to re-forward the data travelling on said optical fibre (302) on another of said optical fibres (301) if an event entailing a risk of severing of said optical fibre (302) is detected.
